(19) Europäisches Patentamt / European Patent Office / Office européen des brevets

(11) **EP 4 369 238 A1**

(12) **EUROPEAN PATENT APPLICATION**

(43) Date of publication:
**15.05.2024  Bulletin 2024/20**

(21) Application number: **23208510.0**

(22) Date of filing: **08.11.2023**

(51) International Patent Classification (IPC):
**G06F 30/15** (2020.01)   **G06F 30/23** (2020.01)
**G06F 30/27** (2020.01)   **G06F 111/10** (2020.01)

(52) Cooperative Patent Classification (CPC):
**G06F 30/15; G06F 30/23; G06F 30/27;**
G06F 2111/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **11.11.2022   IN 202221064699**

(71) Applicant: **Tata Consultancy Services Limited
Maharashtra (IN)**

(72) Inventors:
• **DHRANGDHARIYA, PRIYANKKUMAR
  DHIRAJLAL**
  **411013 Pune (IN)**
• **RAI, BEENA**
  **411013 Pune (IN)**
• **MAITI, SOUMYADIPTA**
  **411013 Pune (IN)**

(74) Representative: **Goddar, Heinz J.
Boehmert & Boehmert
Anwaltspartnerschaft mbB
Pettenkoferstrasse 22
80336 München (DE)**

(54) **SYSTEMS AND METHODS FOR GENERATING OPTIMIZED SPOKE DESIGN FOR NON-PNEUMATIC TIRES (NPT)**

(57)     Non-Pneumatic Tire (NPT) has been widely used due to their various advantages. Existing solutions/approaches provide limited flexibility on the overall tire performance and have less stiffness and poor damage performance. Embodiments of the present disclosure provides systems and methods that generate optimized spoke design for non-pneumatic tires. More specifically, the system of the present disclosure can generate optimized topology with customized property/performance outcomes for NPTs. The variety of spoke designs have been created using a computer generative method. The performance of these generative spoke designs has been investigated using a finite element method (FEM) technique, wherein output of the FEM technique is used for training machine learning model(s) that enable selection of optimal spoke design for tire manufacturing.

obtaining an input comprising one or more Non-Pneumatic Tire (NPT) parameters associated with a tire — 202

generating a plurality of random interpolation points based on the one or more NPT parameters — 204

generating one or more candidate spoke designs from the plurality of random interpolation points — 206

extracting a first curve profile and a second curve profile from the one or more candidate spoke designs — 208

performing a comparison of the first curve profile and the second curve profile of the one or more candidate spoke designs with a first reference curve profile and a second reference curve profile obtained from a reference spoke design — 210

generating one or more updated candidate spoke designs based on the comparison — 212

analysing, using a finite element method (FEM), one or more NPT parameters for the one or more updated candidate spoke designs to obtain the one or more updated NPT parameters — 214

processing, by using one or more machine learning models, the one or more updated NPT parameters to obtain one or more spoke properties — 216

selecting at least one candidate spoke design from the one or more candidate spoke designs based on the one or more spoke properties, wherein the at least one candidate spoke design being selected serves as an optimal spoke design — 218

**FIG. 2**

Processed by Luminess, 75001 PARIS (FR)

EP 4 369 238 A1

**Description**

CROSS-REFERENCE TO RELATED APPLICATIONS AND PRIORITY

The present application claims priority to Indian application no. 202221064699, filed on November 11, 2022.

TECHNICAL FIELD

The disclosure herein generally relates to simulation of Non-Pneumatic Tire (NPT) spoke designs, and, more particularly, to systems and methods for generating optimized spoke design for Non-Pneumatic Tires (NPT).

BACKGROUND

Non-Pneumatic Tire (NPT) has been widely used due to their advantages of no occurrence of puncture related problem, no need of air maintenance, low rolling resistance, and improvement of passenger's comfort due to its better shock absorption. It has a variety of applications as in the earthmovers, planetary rover, stair climbing vehicles, and the like. Optimized tire performance is a crucial factor for consumers and Original Equipment Manufacturers (OEMs). The spoke design has significant effect on the overall working performance of NPTs. Existing solutions/approaches provide limited flexibility on the overall tire performance and have less stiffness and poor damage performance.

SUMMARY

Embodiments of the present disclosure present technological improvements as solutions to one or more of the above-mentioned technical problems recognized by the inventors in conventional systems.

For example, in one aspect, there is provided a processor implemented method for generating optimized spoke design for non-pneumatic tires (NPT). The method comprises obtaining, via one or more hardware processors, an input comprising one or more Non-Pneumatic Tire (NPT) parameters associated with a tire; generating, via the one or more hardware processors, a plurality of random interpolation points based on the one or more NPT parameters; generating, via the one or more hardware processors, one or more candidate spoke designs from the plurality of random interpolation points; extracting, via the one or more hardware processors, a first curve profile and a second curve profile from the one or more candidate spoke designs; performing, via the one or more hardware processors, a comparison of the first curve profile and the second curve profile of the one or more candidate spoke designs with a first reference curve profile and a second reference curve profile obtained from a reference spoke design; generating, via the one or more hardware processors, one or more updated candidate spoke designs based on the comparison; analysing, by using a finite element method (FEM) via the one or more hardware processors, one or more NPT parameters for the one or more updated candidate spoke designs to obtain the one or more updated NPT parameters; processing, by using one or more machine learning models via the one or more hardware processors, the one or more updated NPT parameters to obtain one or more spoke properties; and selecting, via the one or more hardware processors, at least one candidate spoke design from the one or more candidate spoke designs based on the one or more spoke properties, wherein the at least one candidate spoke design being selected serves as an optimal spoke design.

In an embodiment, the method further comprises generating an optimal Non-Pneumatic Tire based on the optimal spoke design; and validating the generated optimal Non-Pneumatic Tire based on the input.

In an embodiment, the one or more Non-Pneumatic Tire (NPT) parameters comprise a stiffness, and a damage resistance, and wherein the stiffness and the damage resistance comprise at least one of an associated type and one or more associated range values.

In an embodiment, the first curve profile and the second curve profile from the one or more spoke designs are extracted by fitting a first set of coordinates and a second set of coordinates obtained from the one or more spoke designs into one or more associated polynomial equations.

In an embodiment, the one or more updated candidate spoke designs are generated by adjusting the first curve profile and the second curve profile of the one or more candidate spoke designs with the first reference curve profile and the second reference curve profile of the reference spoke design to maintain a volume equivalency in the one or more candidate spoke designs.

In an embodiment, the volume equivalency is maintained in the one or more candidate spoke designs by applying a constraint condition for an area difference of the one or more candidate spoke designs such that the area difference of the one or more candidate spoke designs and the reference spoke design is less than or equal to a pre-defined threshold.

In an embodiment, the first curve profile and the second curve profile of the one or more candidate spoke designs are adjusted to enable a cross section of the one or more candidate spoke designs to be similar to the reference spoke design.

In an embodiment, the one or more spoke properties comprise at least one of a tensile strength, a compressive strength, and one or more damage analysis of the one or more updated candidate spoke designs.

In another aspect, there is provided a processor implemented system for generating optimized spoke design for non-pneumatic tires (NPT). The system comprises: a memory storing instructions; one or more communication interfaces; and one or more hardware processors coupled to the memory via the one or more communication interfaces, wherein the one or more hardware processors are configured by the instructions to: obtain an input comprising one or more Non-Pneumatic Tire (NPT) parameters associated with a tire; generate a plurality of random interpolation points based on the one or more NPT parameters; generate one or more candidate spoke designs from the plurality of random interpolation points; extract a first curve profile and a second curve profile from the one or more candidate spoke designs; perform a comparison of the first curve profile and the second curve profile of the one or more candidate spoke designs with a first reference curve profile and a second reference curve profile obtained from a reference spoke design; generate one or more updated candidate spoke designs based on the comparison; analyse, by using a finite element method (FEM), the one or more NPT parameters for the one or more updated candidate spoke designs to obtain the one or more updated NPT parameters; process, by using one or more machine learning models, the one or more updated NPT parameters to obtain one or more spoke properties; and select at least one candidate spoke design from the one or more candidate spoke designs based on the one or more spoke properties, wherein the at least one candidate spoke design being selected serves as an optimal spoke design.

In an embodiment, the one or more hardware processors are further configured by the instructions to generate an optimal Non-Pneumatic Tire based on the optimal spoke design; and validate the generated optimal Non-Pneumatic Tire based on the input.

In an embodiment, the one or more Non-Pneumatic Tire (NPT) parameters comprise a stiffness, and a damage resistance, and wherein the stiffness and the damage resistance comprise at least one of an associated type and one or more associated range values.

In an embodiment, the first curve profile and the second curve profile from the one or more spoke designs are extracted by fitting a first set of coordinates and a second set of coordinates obtained from the one or more spoke designs into one or more associated polynomial equations.

In an embodiment, the one or more updated candidate spoke designs are generated by adjusting the first curve profile and the second curve profile of the one or more candidate spoke designs with the first reference curve profile and the second reference curve profile of the reference spoke design to maintain a volume equivalency in the one or more candidate spoke designs.

In an embodiment, the volume equivalency is maintained in the one or more candidate spoke designs by applying a constraint condition for an area difference of the one or more candidate spoke designs such that the area difference of the one or more candidate spoke designs and the reference spoke design is less than or equal to a pre-defined threshold.

In an embodiment, the first curve profile and the second curve profile of the one or more candidate spoke designs are adjusted to enable a cross section of the one or more candidate spoke designs to be similar to the reference spoke design.

In an embodiment, the one or more spoke properties comprise at least one of a tensile strength, a compressive strength, and one or more damage analysis of the one or more updated candidate spoke designs.

In yet another aspect, there are provided one or more non-transitory machine-readable information storage mediums comprising one or more instructions which when executed by one or more hardware processors cause generating optimized spoke design for non-pneumatic tires (NPT) by obtaining an input comprising one or more Non-Pneumatic Tire (NPT) parameters associated with a tire; generating a plurality of random interpolation points based on the one or more NPT parameters; generating one or more candidate spoke designs from the plurality of random interpolation points; extracting a first curve profile and a second curve profile from the one or more candidate spoke designs; performing a comparison of the first curve profile and the second curve profile of the one or more candidate spoke designs with a first reference curve profile and a second reference curve profile obtained from a reference spoke design; generating one or more updated candidate spoke designs based on the comparison; analysing, by using a finite element method (FEM), one or more NPT parameters for the one or more updated candidate spoke designs to obtain the one or more updated NPT parameters; processing, by using one or more machine learning models, the one or more updated NPT parameters to obtain one or more spoke properties; and selecting at least one candidate spoke design from the one or more candidate spoke designs based on the one or more spoke properties, wherein the at least one candidate spoke design being selected serves as an optimal spoke design.

In an embodiment, the one or more instructions which when executed by the one or more hardware processors cause further generating an optimal Non-Pneumatic Tire based on the optimal spoke design; and validating the generated optimal Non-Pneumatic Tire based on the input.

In an embodiment, the one or more Non-Pneumatic Tire (NPT) parameters comprise a stiffness, and a damage resistance, and wherein the stiffness and the damage resistance comprise at least one of an associated type and one or more associated range values.

In an embodiment, the first curve profile and the second curve profile from the one or more spoke designs are extracted by fitting a first set of coordinates and a second set of coordinates obtained from the one or more spoke designs into one or more associated polynomial equations.

In an embodiment, the one or more updated candidate spoke designs are generated by adjusting the first curve profile and the second curve profile of the one or more candidate spoke designs with the first reference curve profile and the second reference curve profile of the reference spoke design to maintain a volume equivalency in the one or more candidate spoke designs.

In an embodiment, the volume equivalency is maintained in the one or more candidate spoke designs by applying a constraint condition for an area difference of the one or more candidate spoke designs such that the area difference of the one or more candidate spoke designs and the reference spoke design is less than or equal to a predefined threshold.

In an embodiment, the first curve profile and the second curve profile of the one or more candidate spoke designs are adjusted to enable a cross section of the one or more candidate spoke designs to be similar to the reference spoke design.

In an embodiment, the one or more spoke properties comprise at least one of a tensile strength, a compressive strength, and one or more damage analysis of the one or more updated candidate spoke designs.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 depicts an exemplary system for generating optimized spoke design for non-pneumatic tires, in accordance with an embodiment of the present disclosure.

FIG. 2 depicts an exemplary flow chart illustrating a method for generating optimized spoke design for non-pneumatic tires, using the system of FIG. 1, in accordance with an embodiment of the present disclosure.

FIG. 3 depicts a reference tire design having a reference spoke design, in accordance with an embodiment of the present disclosure.

FIG. 4 depicts a first reference curve profile (top reference curve profile) and a second reference curve profile (bottom reference curve profile) extracted from the reference spoke design of the reference tire design, in accordance with an embodiment of the present disclosure.

FIG. 5 depicts random interpolating spline curve fitted to top and bottom interpolation points (also referred as first set of coordinates and a second set of coordinates), in accordance with an embodiment of the present disclosure.

FIGS. 6A and 6B depict a first curve profile and a second curve profile from one or more spoke designs being extracted by fitting a first set of coordinates and a second set of coordinates obtained from the one or more spoke designs into one or more associated polynomial equations, in accordance with an embodiment of the present disclosure.

FIG. 7 depicts a graphical presentation illustrating experimental stress-strain curve of DBDI material and Mooney Rivling model fitting, in accordance with an embodiment of the present disclosure.

FIG. 8 depicts a two-dimensional (2D) finite element method (FEM) candidate spoke design with boundary conditions, in accordance with an embodiment of the present disclosure.

FIG. 9 (also shown as 9(a) and 9(b)) depicts a stiffness comparison of 2D plane strain and 3D simulation for a candidate spoke design, in accordance with an embodiment of the present disclosure.

FIG. 10 depicts a finite element method (FEM) simulation results of Principal strain variation at (a) 20 mm of displacement in compression and (b) at 20 mm of displacement in Tension, in accordance with an embodiment of the present disclosure.

FIG. 11 depicts machine learning (ML) model input features, in accordance with an embodiment of the present disclosure.

FIG. 12 depicts R2 (R-square) score of all output features for various ML models, in accordance with an embodiment of the present disclosure.

FIGS. 13A-13J depict a graphical representation of Parity plots of output features (one or more spoke properties) of the ML models, in accordance with an embodiment of the present disclosure.

FIG. 14 depicts a histogram of RFC and RFT for 50 K designs prediction using the one or more ML models (also referred as optimized ML models and interchangeably used herein), in accordance with an embodiment of the present disclosure.

FIG. 15 depicts various computer aided design (CAD) models of optimized candidate spoke designs of various categories, in accordance with an embodiment of the present disclosure.

FIGS. 16A-16B depict a stiffness comparison for these optimized spoke designs under tensile and compressive loading, in accordance with an embodiment of the present disclosure.

FIG. 17 depicts a graphical representation illustrating a stiffness comparison of the optimal Non-Pneumatic Tire with the reference tire design, in accordance with an embodiment of the present disclosure.

FIGS. 18A-18B depict a graphical representation illustrating a stiffness and damage resistance/predictors comparison of optimized NPT designs with the reference tire design, in accordance with an embodiment of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

As mentioned above, Non-Pneumatic Tire (NPT) has been widely used due to their advantages of no occurrence of puncture related problem, no need of air maintenance, low rolling resistance, and improvement of passenger's comfort due to its better shock absorption. Existing solutions/approaches provide limited flexibility on the overall tire performance and have less stiffness and poor damage performance. Embodiments of the present disclosure provides systems and methods that generate optimized spoke design for non-pneumatic tires. More specifically, the system of the present disclosure can generate optimized topology with customized property/performance outcomes for NPTs. The variety of spoke designs have been created using a computer generative method. The performance of these generative spoke designs has been investigated by using a finite element method (FEM) technique, wherein output of the FEM technique is used for training machine learning model(s) that enable selection of optimal spoke design for tire manufacturing.

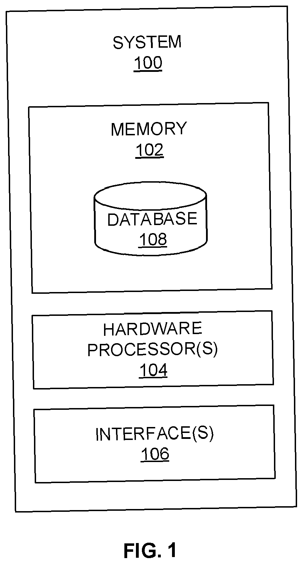

Referring now to the drawings, and more particularly to FIG. 1 through 18B, where similar reference characters denote corresponding features consistently throughout the figures, there are shown preferred embodiments and these embodiments are described in the context of the following exemplary system and/or method.

FIG. 1 depicts an exemplary system 100 for generating optimized spoke design for non-pneumatic tires, in accordance with an embodiment of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises inputs pertaining to one or more Non-Pneumatic Tire (NPT) parameters. The database 108 further comprises information pertaining to various spoke designs, simulated output parameters, optimized spoke design selected, candidate spoke designs, tire designs, and the like. The memory 102 further comprises simulation technique(s) such as finite element method (FEM) technique(s), one or more machine learning models, polynomial equations and associated technique(s), validation technique(s), and the like. The database 108 further comprises curve profiles of both one or more candidate spoke designs and reference spoke design, one or more spoke properties, and the like. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

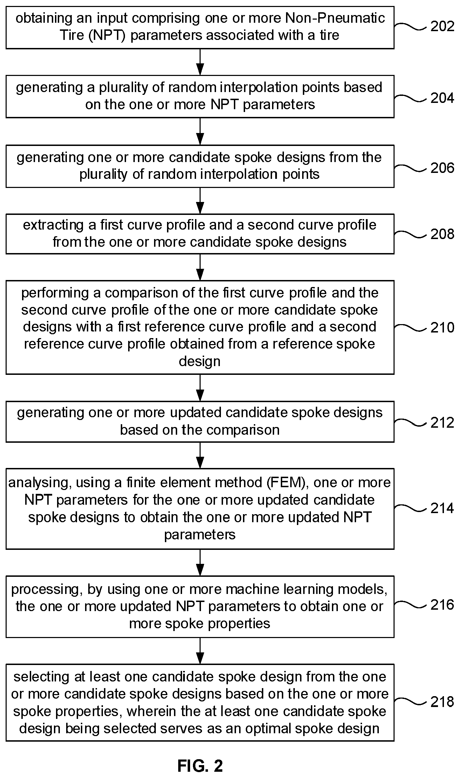

FIG. 2 depicts an exemplary flow chart illustrating a method for generating optimized spoke design for non-pneumatic tires, using the system 100 of FIG. 1, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, the block diagram of the system 100 depicted in FIG. 1, the flow diagram as depicted in FIG. 2, and FIGS. 3 through 18B.

At step 202 of the method of the present disclosure, the one or more hardware processors 104 obtain an input comprising one or more Non-Pneumatic Tire (NPT) parameters associated with a tire. The one or more Non-Pneumatic Tire (NPT) parameters comprise a stiffness, and a damage resistance. Each of the stiffness and the damage resistance comprise at least one of an associated type and one or more associated range values. The expression 'stiffness' may also be referred as 'cushioning effect' and may be interchangeably used herein. It is to be understood by a person having ordinary skill in the art or person skilled in the art that the associated type and the one or more range values shall not be construed as limiting the scope of the present disclosure. In other words, one or more variations in the range values can be implemented by the system and method of the present disclosure. For instance, in some scenarios a single value (e.g., say stiffness of 'p value' of the NPT parameters may be provided as input to the system 100 instead of a range (e.g., say stiffness may be a value between 'x and y' values). The associated type for the stiffness may include but are not limited to less stiffness, moderate stiffness, more/high stiffness, and the like. For instance, the range value for the less stiffness (more cushioning effect) as NPT parameter such as road friction coefficient (RFC) may be between 'x1' and 'y1' wherein 'x1=200 N, and y1=290N. The range value for the stiffness as NPT parameter such as run flat tire (RFT) may be between 'x2' and 'y2' wherein 'x2=6000 N, and y2=7500 N. The range value for the stiffness as NPT parameter such as strain energy density in compression (SEDC) may be between 'x3' and 'y3' wherein 'x3=0.132 mJ/mm$^3$, and y3= mJ/mm$^3$. The range value for the stiffness as NPT parameter such as PstrainC (also referred as Principle strain-compression) may be in a specific order (e.g., say ascending order or descending order). It is to be understood by a person having ordinary skill in the art or person skilled in the art that inputs may be obtained by the system 100 in relation to moderate stiffness, more/high stiffness, and the like. Similarly, the associated type for the damage resistance may include but are not limited to good damage resistance, better damage resistance, best damage resistance, and the like. For best damage resistance as NPT parameter, range values may include such as RFC < 500 N, RFT < 11000N, PstrainC < 0.04, SEDC < 0.06 mJ/mm$^3$, PstrainT (also referred as Principle strain-tensile) <0.17, RFC: ascending order, and the like. It is to be understood by a person having ordinary skill in the art or person skilled in the art that the above-mentioned inputs shall not be construed as limiting the scope of the present disclosure. In some scenarios, the input may be in the form of values for each NPT parameter and the system 100 may automatically identify whether these inputs need to be categorized as less stiffness, moderate stiffness, more/high stiffness, good damage resistance, better damage resistance, best damage resistance, and the like. It is to be understood by a person having ordinary skill in the art or person skilled in the art that such categorization shall not be construed as limiting the scope of the present disclosure. It is to be further understood by a person having ordinary skill in the art or person skilled in the art that the above-mentioned inputs provided to the system 100 (or obtained from user) may vary from the pre-defined NPT parameters comprised in the database 108 stored in the memory 102. In such scenarios, the database 108 may be periodically updated with recent inputs as and when received wherein the system 100 may automatically use this data for self-learning and producing optimized spoke designs and tire during simulation.

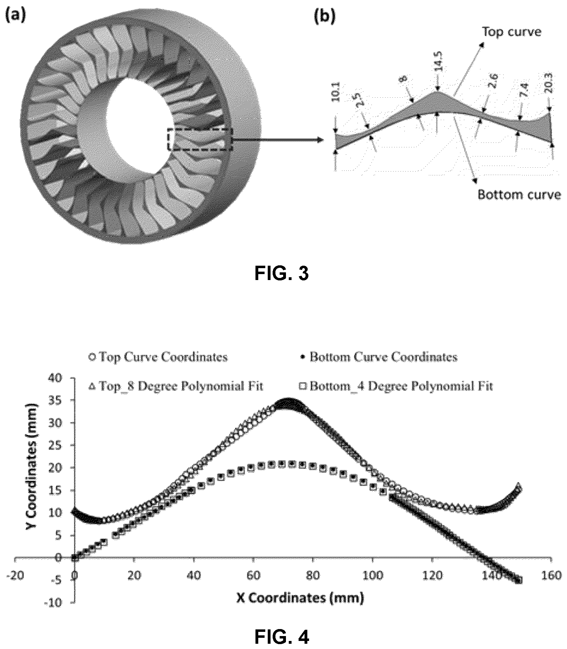

At step 204 of the method of the present disclosure, the one or more hardware processors 104 generate a plurality of random interpolation points based on the one or more NPT parameters. At step 206 of the method of the present disclosure, the one or more hardware processors 104 generate one or more candidate spoke designs from the plurality of random interpolation points. At step 208 of the method of the present disclosure, the one or more hardware processors 104 extract a first curve profile and a second curve profile from the one or more candidate spoke designs. The first curve profile and the second curve profile from the one or more spoke designs are extracted by fitting a first set of coordinates and a second set of coordinates obtained from the one or more spoke designs into one or more associated polynomial equations. The first set of coordinates may be referred as 'top coordinates' of the one or more spoke designs and the second set of coordinates may be referred as 'bottom coordinates' of the one or more spoke designs or vice-versa. Similarly, the first curve profile may be referred as 'top curve profile' of the one or more spoke designs, and the second curve profile may be referred as 'bottom curve profile' of the one or more spoke designs. At step 210 of the method of the present disclosure, the one or more hardware processors 104 perform a comparison of the first curve profile and the second curve profile of the one or more candidate spoke designs with a first reference curve profile and a second reference curve profile obtained from a reference spoke design. FIG. 3, with reference to FIGS. 1 through 2, depicts a reference tire design having a reference spoke design, in accordance with an embodiment of the present disclosure. FIG. 4, with reference to FIGS. 1 through 2, depicts a first reference curve profile (top reference curve profile) and a second reference curve profile (bottom reference curve profile) extracted from the reference spoke design of the reference tire design, in accordance with an embodiment of the present disclosure. At step 212 of the method of the present disclosure, the one or more hardware processors 104 generate one or more updated candidate spoke designs based on the comparison. In an embodiment of the present disclosure, the one or more updated candidate spoke designs are generated by adjusting the first curve profile and the second curve profile of the one or more candidate spoke designs with the first reference curve profile and the second reference curve profile of the reference spoke design to maintain a volume equivalency in the one or more candidate spoke designs. In other words, referring to the step 210, the system 100 superimposes the first curve profile and the second curve profile of the one or more candidate spoke designs on the first reference curve profile and the second reference curve profile obtained from the reference spoke design to determine deviation therein and accordingly the first curve profile and the second curve profile are adjusted for maintaining the volume equivalency. Alternatively, the system 100 may superimpose the first reference curve profile and the second reference curve profile obtained from the reference spoke design on the first curve profile and the second curve profile of the one or more candidate spoke designs to determine deviation therein and accordingly the first curve profile and the second curve profile are adjusted for maintaining the volume equivalency. The adjustment of the first curve profile and the second curve profile results in obtaining the one or more updated candidate spoke designs as output from the system 100 at step 212 as mentioned above. Adjustment of the first curve profile and the second curve profile may involve adjusting the one or more points (or associated coordinates) with respect to points/coordinates of the first reference curve profile and the second reference curve profile. This adjustment also ensures that the one or more updated candidate spoke designs obtained do not deviate (or have less deviation) from the reference spoke design and are thus suitable for manufacturing the right spokes and NPTs. Once the comparison involving the adjustment is done the one or more updated candidate spoke designs are generated. The one or more updated candidate spoke designs tend to appear similar/identical to the reference spoke design depicted in FIG. 3 (refer right side simulated image/(or CAD) shown as (b)). The volume equivalency is maintained in the one or more candidate spoke designs by applying a constraint condition for an area difference of the one or more candidate spoke designs such that the area difference of the one or more candidate spoke designs and the reference spoke design is less than or equal to a pre-defined threshold, in an embodiment of the present disclosure. Further, the first curve profile and the second curve profile of the one or more candidate spoke designs are adjusted to enable a cross section of the one or more candidate spoke designs to be similar to the reference spoke design.

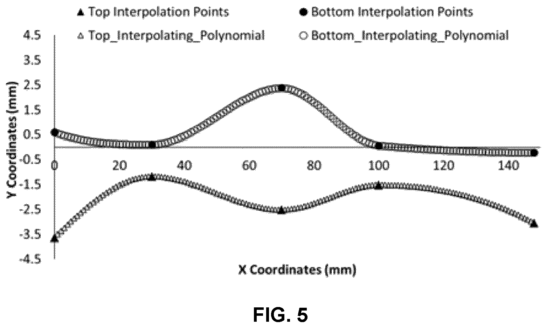

The above steps of 204 till 212 are better understood by way of following description: To generate various spoke designs with varying top and bottom curve profiles, Piecewise Cubic Hermite Interpolating Polynomial (PCHIP) spline technique has been utilized and implemented by the system 100 and method of the present disclosure. It is to be understood by a person having ordinary skill in the art or person skilled in the art that such spline technique shall not be construed as limiting the scope of the present disclosure. There are 5 interpolation points those have been selected at distance of 0, 30, 70, 100 and 149 mm in 'X' coordinates. The 'Y' coordinates have been assigned with uniform random number generation in the range of (i) 'a1' and 'b1' values (e.g., a=-4.5 and b=+4.5 mm) for top curve and (ii) 'a2' and 'b2' values (e.g., a2=-2.5 and b2=+2.5 mm) for bottom curve (refer step 204 for random interpolation points). The interpolation points of top and bottom points are shown in the FIG. 4 with filled circular marks. PCHIP spline interpolating polynomial is used to fit these randomly generated interpolation points. 150 equidistant datapoints have been generated along the X axis of spoke profiles with the help of PCHIP interpolating spline fitting through the 5 previously specified interpolation points (e.g., refer FIG. 2 and step 206). More specifically, FIG. 5, with reference to FIG. 1, depicts random interpolating spline curve fitted to top and bottom interpolation points (also referred as first set of coordinates and a second set of coordinates), in accordance with an embodiment of the present disclosure. Unique Puncture-Proof Tire System (UPTIS) non-pneumatic tires are being introduced for passenger vehicles in the industry. The CAD model of NPT-UPTIS (also referred as reference tire design) is shown in FIG. 3, wherein the reference spoke design of the UPTIS spoke with thickness variation is also shown. For the spoke of UPTIS, there are the first reference curve profile and the second reference curve profile top and bottom curve profiles as shown in FIG. 4. Further, referring back to the first curve profile and the second curve profile extraction, to trace the profile of top and bottom curve for the modelling purpose by the system 100, around 150 coordinate points of top and bottom curve have been extracted as shown in FIG. 5. The first curve profile and the second curve profile from the one or more spoke designs are extracted by fitting a first set of coordinates and a second set of coordinates obtained from the one or more spoke designs into one or more associated polynomial equations. The coordinates can be seen in FIG. 5. It can be observed from FIG. 5 that curve fitting with 8-degree and 4-degree polynomials are giving good fitting for top and bottom spoke-coordinates (or the first curve profile and the second curve profile), respectively. The polynomial equations for top and bottom curve fittings are described in equations 1 and 2. Further, the coefficients for 8-degree polynomial and 4-degree polynomial are shown in Table 1 and Table 2 respectively.

$$Y_{top} = a_0 + a_1 X_t + a_2 X_t^2 + a_3 X_t^3 + a_4 X_t^4 + a_5 X_t^5 + a_6 X_t^6 + a_7 X_t^7$$
$$+ a_8 X_t^8 \quad \ldots\ldots\ldots (1)$$

$$Y_{bot} = b_0 + b_1 X_b + b_2 X_b^2 + b_3 X_b^3 + b_4 X_b^4 \ldots\ldots\ldots\ldots (2)$$

where, $Y_{top}$ and $Y_{bot}$ are the polynomial fitted Y-coordinates of top and bottom curve surfaces/profiles of the spoke. $X_t$ and $X_b$ are the X-coordinates of top and bottom curve surfaces of the spoke.

Table 1

| $a_0$ | $a_1$ | $a_2$ | $a_3$ | $a_4$ | $a_5$ | $a_6$ | $a_7$ | $a_8$ |
|---|---|---|---|---|---|---|---|---|
| 10.731 | -0.8865 | 0.10641 | -0.0054192 | 0.00015706 | -2.4846E-06 | 2.1164E-08 | -9.1524E-11 | 1.5803E-13 |

Table 2

| $b_0$ | $b_1$ | $b_2$ | $b_3$ | $b_4$ |
|---|---|---|---|---|
| 0.029891 | 0.31518 | 0.0052969 | -0.00010414 | 3.5481E-07 |

These coordinates of interpolating spline polynomial have been added to the initial top and bottom curve coordinates as shown in the equation 3.

$$Y_{Gen} = Y_{initial} + Y_{chip} \ldots\ldots\ldots\ldots\ldots\ldots\ldots (3)$$

where,

$Y_{initial}$ = Y coordinates of $Y_{top}$ or $Y_{bot}$
$Y_{Chip}$ = Y coordinates of interpolating polynomial curve fitted to the 5 interpolation points.

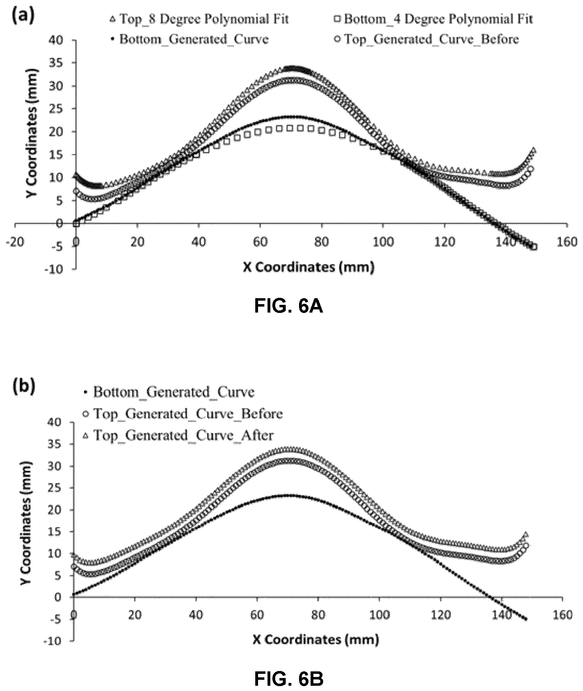

FIGS. 6A and 6B (collectively referred as FIG. 6) illustrate a generated spoke profile after adding the interpolating spline to the base-design of top and bottom 8-degree and 4-degree polynomials. In other words, FIGS. 6A and 6B, with reference to FIGS. 1 through 5, depict the first curve profile and the second curve profile from the one or more spoke designs being extracted by fitting a first set of coordinates and a second set of coordinates obtained from the one or more spoke designs into one or more associated polynomial equations, in accordance with an embodiment of the present disclosure. As mentioned above, to maintain the volume equivalency in all the generated spoke designs (e.g., the one or more candidate spoke designs), a constraint condition for the associated area difference has been applied such that the area difference of the one or more candidate spoke designs and the reference spoke design is less than or equal to a pre-defined threshold (e.g., 0.1%). In other words, the area difference of the one or more candidate spoke designs and the reference spoke design would not exceed to 0.1%. As shown in FIG. 6B there are two generated curves (e.g., first curve profile and the second curve profile) with after and before labelling index. The first curve profile and the second curve profile which are generated/extracted from equation 3 do not necessarily satisfy the area difference convergence criterion. Hence increment or decrement of Y-coordinate values in steps of 0.001 mm has been done in each iteration (e.g., refer step 210). The increment or decrement of Y coordinates are continued iteratively in a loop until the one or more candidate spoke designs would attain the area difference within the 0.1% limit, with respect to the reference spoke design. With this approach 50,000 such new spoke designs (one or more candidate spoke designs) were been generated by the method and system 100 of the present disclosure. All these one or more candidate spoke designs satisfied the area and volume constancy within the range of $\pm$ 0.1%.

Out of these 50,000 designs, 200 designs have been used to analyse the spoke performance using Finite Element Method (FEM) and later to train the Machine Learning (ML) model. 25 designs have been used to cross validate the ML models and rest of the design's performances have been predicted through the optimized ML models.

In this regard, at step 214 of the method of the present disclosure, the one or more hardware processors 104 analyse, by using a finite element method (FEM), the one or more NPT parameters for the one or more updated candidate spoke designs to obtain the one or more updated NPT parameters. The stiffness and damage resistance of NPTs can be modified with spoke material property and choice of spoke design. In the present disclosure, the system 100 and the method of FIG. 2, aim to find an optimal spoke design with variety of stiffness criteria and best damage resistance parameters. FEM simulations for 2D spokes and full optimized NPT tire have been performed.

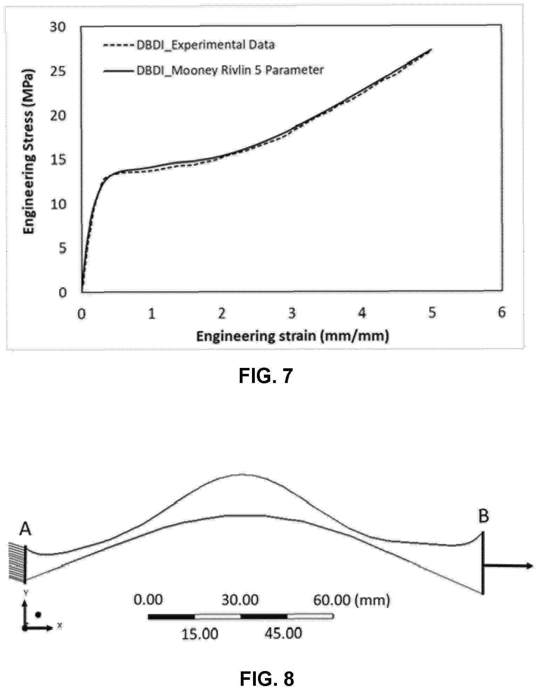

Below description illustrates FEM on the one or more NPT parameters for the one or more updated candidate spoke designs: Polyurethane based dibenzyle diisocyanate (DBDI) elastomer material property was selected by the system 100 and method of the present disclosure. Details of DBDI stress-strain curve and Mooney-Rivlin 5 parameter curve fitting is shown in FIG. 6. More specifically, FIG. 7, with reference to FIGS. 1 through 6B, depicts a graphical presentation illustrating experimental stress-strain curve of DBDI material and Mooney Rivling model fitting, in accordance with an embodiment of the present disclosure. From FIG. 7, it can be observed that Mooney-Rivlin 5 parameter model is quite efficient to capture the nonlinearity of DBDI throughout the experimental stress-strain curve.

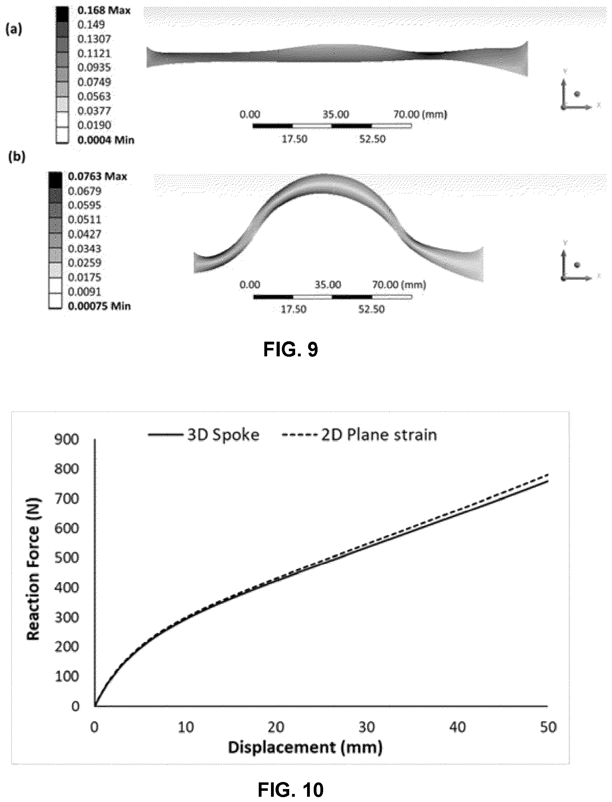

The first and the second curve profiles of the candidate spoke designs are obtained and 2D CAD model has been created using ANSYS Design Modeler as shown in FIG. 8. FIG. 8, with reference to FIG. 1 through 7, depicts a two-dimensional (2D) finite element method (FEM) candidate spoke design with boundary conditions, in accordance with an embodiment of the present disclosure. In the present disclosure, the system 100 and method created a total 225 such 2D cad models for FEM simulation. As the candidate spoke design is symmetric in a 3rd dimension (Z direction) and the strain in the third dimension is negligible, plane strain condition is assumed and 2D FEM simulations are performed. Left side face of the spoke is restrained with a fixed support boundary condition to restrict the translational and rotational movements which is depicted with 'A' and displacement has been applied at the right end face as mentioned with 'B' in FIG. 8. The spoke performance has been analysed with both tensile and compressive type elastic deformation simulations. In first case, 50 mm of tensile displacement (in + X direction) was applied and in second case 50 of compressive displacement (in - X direction) was applied at the right end side of spoke (marked with 'B' in FIG. 8). The element used for 2D plane strain FEM simulation is PLANE 182 with mesh size around 1 mm, in an example embodiment of the present disclosure. To verify the plane strain assumption of spoke deformation, FEM simulation with similar boundary conditions were carried out with 3D spoke having same 2D profile and with a thickness of 215 mm. The stiffness comparison of 2D plane strain assumption and 3D simulation is shown in FIG. 9. FIG. 9 (also shown as 9(a) and 9(b)), with reference to FIGS. 1 through 8, depicts a stiffness comparison of 2D plane strain and 3D simulation for a candidate spoke design, in accordance with an embodiment of the present disclosure. The trend of stiffness in 2D and 3D simulation is matching with each other.

The principal strain variation in the 2D spoke in tension and in compression at 20 mm of displacement has been captured in FIG. 10. More specifically, FIG. 10, with reference to FIGS. 1 through 9, depicts a finite element method (FEM) simulation results of Principal strain variation at (a) 20 mm of displacement in compression and (b) at 20 mm of displacement in Tension, in accordance with an embodiment of the present disclosure.

Similarly, a total of 10 different output properties from these 2D FEM simulations are shown in Table 3. These have been recorded as output to train the ML models. Reaction force in tension and compression is under the stiffness category, and to predict the damage performance of the spoke design, maximum principal stress, maximum principal strain, octahedral shear strain and strain energy density (SED) have been used as key output parameters.

Table 3

| Performance | Different Output Features | Condition |
|---|---|---|
| Stiffness | Reaction force in compression and in tension (RFC and RFT) | At 20 mm of Displacement |
| Damage | Maximum principal stress (compression and tension) | At 300 N of Reaction Force (Compression) At 10000 N of Reaction Force (Tension) |

(continued)

| Performance | Different Output Features | Condition |
|---|---|---|
| Damage | Max principal strain (compression and tension) | At 300 N of Reaction Force (Compression) At 10000 N of Reaction Force (Tension) |
| Damage | Max octahedral shear strain (compression and tension) | At 300 N of Reaction Force (Compression) At 10000 N of Reaction Force (Tension) |
| Damage | Strain energy density (compression and tension) | At 300 N of Reaction Force (Compression) At 10000 N of Reaction Force (Tension) |

Referring to steps of FIG. 2, at step 216 of the method of the present disclosure, the one or more hardware processors 104 process, by using one or more machine learning models, the one or more updated NPT parameters to obtain one or more spoke properties. The one or more spoke properties comprise at least one of a tensile strength, a compressive strength, and one or more damage analysis of the one or more updated candidate spoke designs, in an embodiment of the present disclosure. It is to be understood by a person having ordinary skill in the art or person skilled in the art that the above-mentioned examples of the one or more spoke properties shall not be construed as limiting the scope of the present disclosure. At step 218 of the method of the present disclosure, the one or more hardware processors 104 select at least one candidate spoke design from the one or more candidate spoke designs based on the one or more spoke properties, wherein the at least one candidate spoke design being selected serves as an optimal spoke design. In the method of the present disclosure, the one or more hardware processors 104 further generate an optimal Non-Pneumatic Tire based on the optimal spoke design; and validate the generated optimal Non-Pneumatic Tire based on the input.

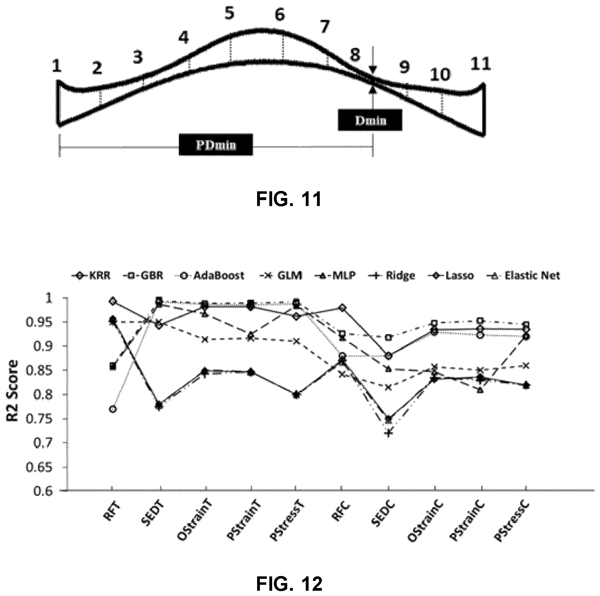

The above steps 216 till 218 are better understood by way of following description: Various spoke geometry-based input features (or also referred as one or more updated NPT parameters) combinations have been tried to model the output features (e.g., also referred as obtain one or more spoke properties) mentioned in Table 3. The combination of 18 input features including 5 bottom interpolation points (explained above), 11 thickness values at equidistant locations of the spoke, the minimum thickness of spoke ($D_{min}$) and the position of the minimum thickness ($PD_{min}$) are shown in FIG. 11. FIG. 11, with reference to FIGS. 1 through 10, depicts machine learning model input features, in accordance with an embodiment of the present disclosure. These inputs features (the one or more updated NPT parameters) have been found as the best input feature combination compared to other trials. 200 designs were used to train the ML models, where 160 designs were assigned for the train dataset and 40 designs were assigned as the test dataset, by the system 100 and method of the present disclosure. Details of ML mdoles are provided below by way of illustrative examples. The basics of ML Regression techniques which were implemented in by the system and method of the present disclosure are given below:

Ordinary Least Square (OLS) or Simple Linear Regression: It is simple linear regression technique without considering regularization phenomena. The objective function to minimize for Ordinary Least Square technique is mentioned in equation (4), where $X$ is input feature design matrix, $w$ is the coefficients for the fitted model and $y$ indicates output matrix.

$$\min_{w} \left\| Xw - y \right\|^2 \qquad (4)$$

Ridge Regression: The ridge regression coefficients minimize a penalized residual sum of squares. The objective function to minimize in the ridge regression technique has been described in equation (5). In addition to ordinary least square model, ridge regression technique has one additional term which is called $L_2$ regularization term represented as second term in the equation, where $\alpha$ is regularization coefficient.

$$\underset{w}{min} \left|\left|Xw - y\right|\right|^2 + \alpha\left|\left|w\right|\right|_2^2 \quad (5)$$

Lasso Regression: Lasso regression technique has $L_1$ regularization term. The minimization objective function looks like Ridge Regression, but it has $L_1$ regularization term instead of $L_2$ as shown in equation (6).

$$\underset{w}{min} \frac{1}{2n_{samples}} \left|\left|Xw - y\right|\right|^2 + \alpha\left|\left|w\right|\right|_1 \quad (6)$$

Elastic Net Regression: It has both $L_1$ and $L_2$ regularization term in its objective function as shown in equation (7). This combination allows for learning a sparse model where few of the weights are non-zero like Lasso, while still maintaining the regularization properties of Ridge, alpha ($\alpha$) and $l_1$ ratio ($\rho$), both parameters are regularization coefficients.

$$\underset{w}{min} \frac{1}{2n_{samples}} \left|\left|Xw - y\right|\right|^2 + \alpha\rho\left|\left|w\right|\right|_1 + \frac{\alpha(1-\rho)}{2}\left|\left|w\right|\right|_2^2 \quad (7)$$

Kernel Ridge Regression (KRR): This model combines ridge regression (linear least squares with $l_2$-norm regularization) with the kernel trick. There are many kernels like polynomial, Laplacian, Radial Basis Function (RBF), Sigmoid, Laplacian. Kernels trick takes its input vector in the original space and returns the dot product of the vectors in the feature space.

Adaboost Regressor Technique: The core principle of Adaboost is to fit sequence of weak learners on repeatedly modified version of the data. The number of weak learners is controlled by n-estimators. The learning rate parameter controls the contribution of the weak learners in the final combination.

Multi-Layer perceptron (MLP): This is a class of feedforward artificial neural network (ANN). An MLP consists of at least three layers of nodes: an input layer, a hidden layer, and an output layer. Except for the input nodes, each node is a neuron that uses a nonlinear activation function. MI,P utilizes a supervised learning technique called back propagation for training. There are different activation functions which can be implemented in MLP like identity, ReLU (Rectified linear unit), tanh, and sigmoid.

Gradient Boosting Regressor (GBR): GBR uses decision tree regressor of fixed sizes as weak learners. GBR allows various loss functions like squared error, huber, quantile, least absolute deviation (LAD) etc. As like decision tree method, in GBR, we have the flexibility to select the number of weak learners from n-estimators and depth of tree from max-depth input parameters.

Generalized Linear Model (GLM): GLM extend linear models in two ways. First, the predicted values $\hat{y}$ are linked to a linear combination of the input variables $X$ via an inverse link function $h$ as shown in equation (7). Log link function has been selected in this analysis as an inverse link function ($h$).

$$\hat{y}(w, X) = h(Xw) \quad (8)$$

Secondly the squared loss function which are used in early regression techniques like OLS, Ridge, Lasso and Elastic-Net is replaced by deviance d as mentioned in equation (9).

$$\underset{w}{min} \frac{1}{2n_{samples}} \sum_i d(y_i, \hat{y_i}) + \frac{\alpha}{2}\left|\left|w\right|\right|_2 \quad (9)$$

There are multiple choices of deviance distribution like Normal, Poisson, Gamma, Inverse Gaussian. Here, the system and method used Poisson unit deviance distribution which can be represented mathematically as shown in equation (10).

$$d(y_i, \widehat{y_i}) = 2 \left( y log \frac{y}{\widehat{y}} - y + \widehat{y} \right) \quad (10)$$

Scaling and Hyper tuning technique: Standardization (standard scaling technique) is the scaling technique where the values are centered around the mean with a unit standard deviation. This means that the mean of the attribute becomes zero and the resultant distribution has a unit standard deviation. This technique has been implemented for pre-processing of data. It can be represented in the form of equation (11).

$$X' = \frac{X - \mu}{\sigma} \quad (11)$$

Where $\mu$ = Mean value of the data, $\sigma$ = Standard deviation, $X'$ = Scaled input design matrix, and $X$ = Original design matrix.

GridsearchCV and Kfold cross validation hyper tuning technique have been implemented by the system and method of the present disclosure to find out the optimized and best combination of various ML model's parameters and it also overcomes the overfitting issues.

Performance of ML models: The performance of various ML models has been compared in terms of R-square score in the following Table 4 and FIG. 12. More specifically, Table 4 depicts R2 score for all ouput features for different ML models.

Table 4

| Output / ML Model | Tension | | | | | Compression | | | | |
|---|---|---|---|---|---|---|---|---|---|---|
| | RF | SED | OStrain | PStrain | PStress | RF | SED | OStrain | PStrain | PStress |
| Ridge | 0.952 | 0.775 | 0.843 | 0.847 | 0.8 | 0.87 | 0.72 | 0.835 | 0.83 | 0.82 |
| Lasso | 0.957 | 0.78 | 0.849 | 0.847 | 0.8 | 0.872 | 0.75 | 0.832 | 0.837 | 0.82 |
| Elastic-Net | 0.956 | 0.778 | 0.85 | 0.847 | 0.8 | 0.867 | 0.747 | 0.835 | 0.834 | 0.819 |
| GLM | 0.95 | 0.95 | 0.914 | 0.916 | 0.91 | 0.842 | 0.815 | 0.857 | 0.85 | 0.86 |
| KRR | **0.993** | 0.943 | 0.982 | 0.982 | 0.962 | **0.98** | 0.88 | 0.934 | 0.934 | 0.935 |
| AdaBoost | 0.77 | 0.992 | 0.987 | 0.986 | 0.988 | 0.88 | 0.88 | 0.929 | 0.923 | 0.92 |
| GBR | 0.86 | **0.995** | **0.989** | **0.99** | **0.992** | 0.926 | **0.918** | **0.948** | **0.953** | **0.945** |
| MLP | 0.857 | 0.987 | 0.967 | 0.925 | 0.984 | 0.917 | 0.853 | 0.847 | 0.81 | 0.922 |

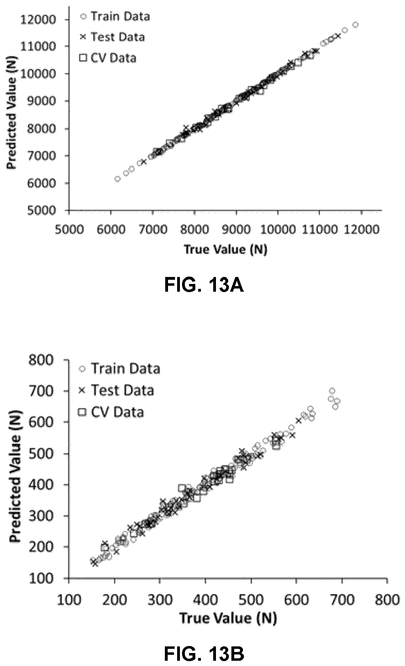

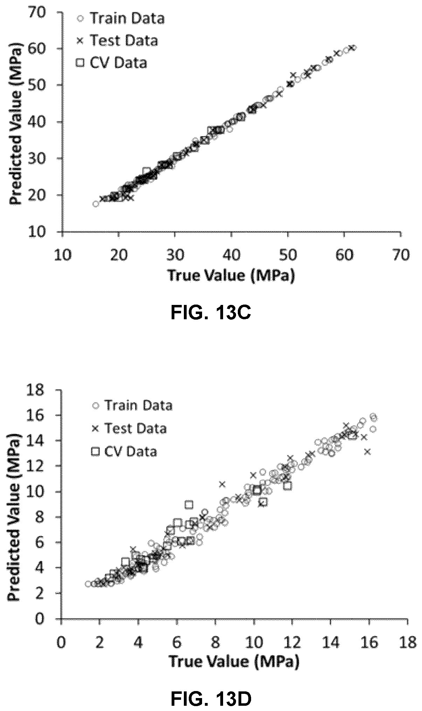

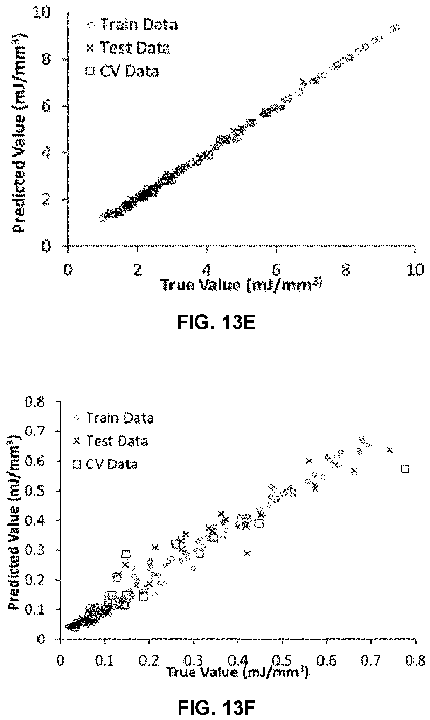

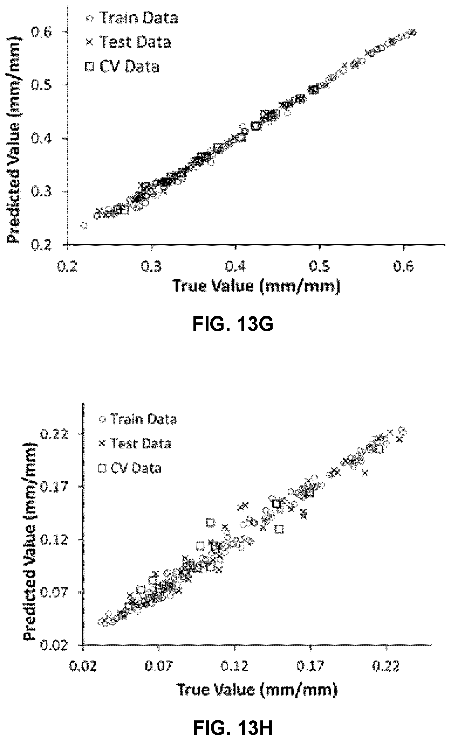

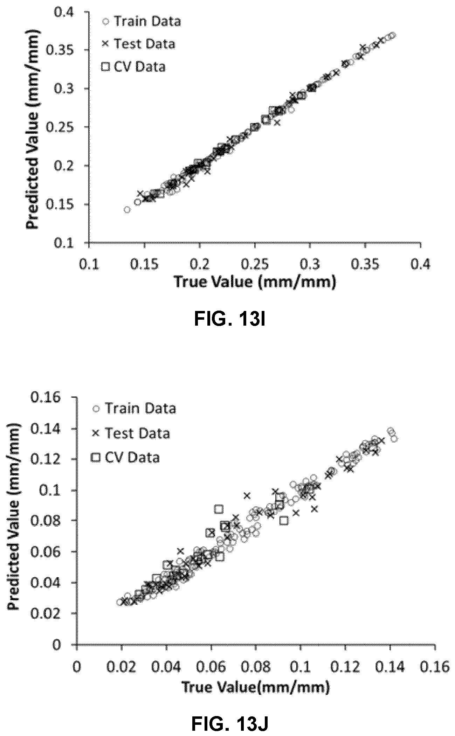

FIG. 12, with reference to FIGS. 1 through 11, depicts R2 (R-square) score of all output features for various ML models, in accordance with an embodiment of the present disclosure. The R-square score for Reaction Force in Compression and Tension (RFT and RFC) is highest in KRR Model and for other damage resistance output parameters GBR is performing well. Hence these two ML modelling techniques have been selected as the best ML models for this analysis. Further the parameters of these ML models have been optimized with KFold and GridsearchCV hyper parameter tuning techniques to overcome overfitting and the models are further cross validated with 25 additional FEM designs as shown in parity plot with cross markers (refer FIGS. 13A through 13J). FIGS. 13A-13J, with reference to FIGS. 1 through 12, depict a graphical representation of Parity plots of output features (one or more spoke properties) of the ML models, in accordance with an embodiment of the present disclosure. More specifically, FIGS. 12A through 12J depict Parity plots of (a) RFT (b) RFC (c) PStressT (d) PStressC (e) SEDT (f) SEDC (g) OStrainT (h) OStrainC (i) PStrainT, and (j) PstrainC with their train, test, and cross validation data points.

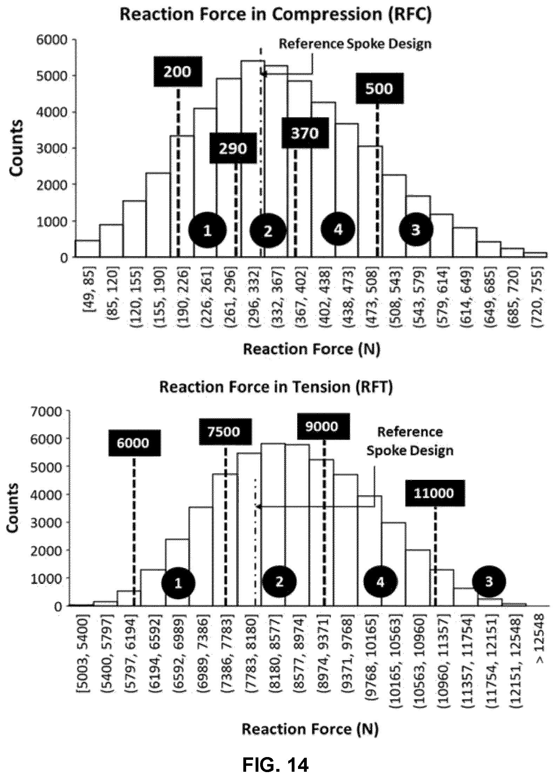

These optimized ML models were used to predict the output features for 50 K generated spoke designs. The RFT and RFC results of ML model predictions are expressed in the histograms as shown in FIG. 14. More specifically, FIG. 14, with reference to FIGS. 1 through 13J, depicts a histogram of RFC and RFT for 50 K designs prediction using the one or more ML models (also referred as optimized ML models and interchangeably used herein), in accordance with an embodiment of the present disclosure. It can be analysed that the generated 50 K designs have a variety of stiffness values in tension and compression. The dash dot line in histogram represents the value of RFC and RFT for initial or base design. Based on the RFC and RFT histogram, it has been decided to select the optimized spoke design with a variety of stiffness levels and having best damage resisting performance. One the spoke properties are obtained, at least one candidate spoke design from the one or more candidate spoke designs is selected based on the one or more spoke properties at step 218, wherein the at least one candidate spoke design being selected serves as an optimal spoke design. Hence, three different categories of stiffnesses like less stiff (having more cushioning effect), moderate stiff and high stiff (more load carrying capacity) regions in the histogram have been sorted out. In addition to these stiffness categories, one more design category with intermediate stiffness combined with best damage performance output was selected by the system 100 and method of the present disclosure. The range of RFC, RFT, SEDC, PstrainC, and PstrainT (as defined in Table 3), those are used to filter out the generated candidate spoke designs (e.g., refer categories as mentioned in step 202 above).

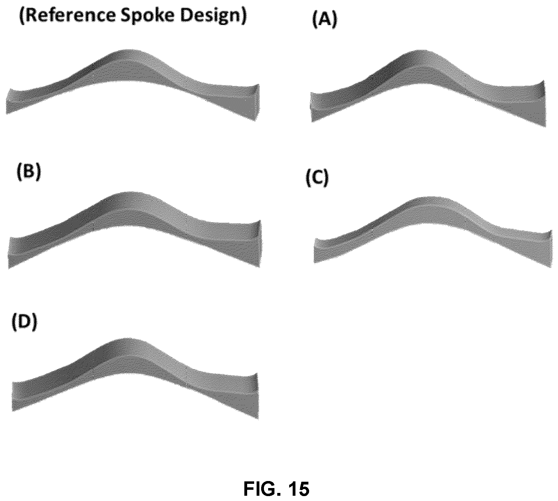

Optimized selected designs from each category was selected and the spoke CAD models were developed from their top and bottom curve profiles. One such optimized spoke model from each of the design categories is shown in FIG. 15, where A, B, C, and D indicates less stiff, moderate stiff, more stiff and best damage resistant categories, respectively. More specifically, FIG. 15, with reference to FIGS. 1 through 14, depicts various computer aided design (CAD) models of optimized candidate spoke designs of various categories, in accordance with an embodiment of the present disclosure. As depicted in FIG. 15, the categories include, but are not limited to, A (Less stiff), B (Moderate Stiff), C (High stiff), and D (Best damage resistant) with the reference spoke design. These individual optimized spoke designs have been used to develop a full 3-D model of the whole NPT tire and all its spokes. 3D FEM simulation of the whole NPTs was carried out for load-displacement related elastic deformation by the reaction force from flat road to check the effect of these optimized spoke performances on the whole NPT stiffness and damage parameters.

The stiffness and damage resisting performance of optimized spoke designs which are shown in FIG. 15 have been analysed using 3D FEM simulation under tensile and compressive loading. Boundary conditions for 3D FEM tensile and compressive loading are like 2D FEM simulations as shown in FIG. 7. Fixed support and 50 mm of displacement was applied to A (Left side) and B (Right side) end of the spoke design, respectively. The width of spoke was taken as 75 mm. The mesh size was selected as 5 mm for all the simulations of the spoke designs.

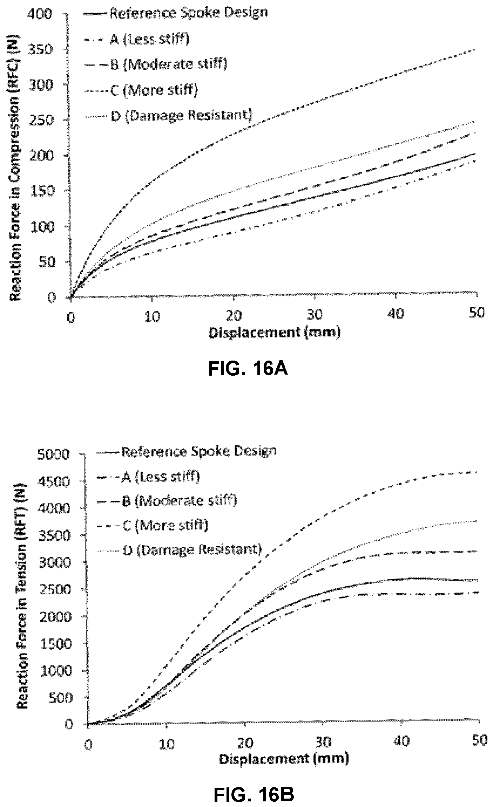

FIGS. 16A-16B, with reference to FIGS. 1 through 15, depict a stiffness comparison for these optimized spoke designs under tensile and compressive loading, in accordance with an embodiment of the present disclosure. In both cases there is significant difference in the stiffness of A, B and C category. Stiffness trend looks almost similar in both tensile and compressive case. Table 5 and Table 6 show stiffness and the damage resistance values of the optimal/candidate spoke designs at 20 mm of road displacement for 3D spoke FEM simulations under (a) compressive loading, and (b) tensile loading.

Table 5

| Output @ 20 mm of displacement | Reference Spoke Design | A | B | C | D |
|---|---|---|---|---|---|
| Reaction Force (N) | 109.16 | 88.657 | 120.63 | 225.33 | 146.22 |
| Max Principal strain | 0.09542 | 0.10454 | 0.09778 | 0.07385 | 0.08266 |
| Max Principal stress (MPa) | 8.5633 | 9.4441 | 8.6865 | 6.5692 | 7.0829 |
| Max OSS | 0.13576 | 0.14908 | 0.13875 | 0.11161 | 0.11709 |

(continued)

| Output @ 20 mm of displacement | Reference Spoke Design | A | B | C | D |
|---|---|---|---|---|---|
| Max SED (mJ/mm$^3$) | 0.63888 | 0.74708 | 0.67657 | 0.41287 | 0.48712 |

Table 6

| Output @ 20 mm of displacement | Reference Spoke Design | A | B | C | D |
|---|---|---|---|---|---|
| Reaction Force (N) | 1747.7 | 1592.7 | 1996 | 2680.1 | 2006 |
| Max Principal strain | 0.21723 | 0.2099 | 0.184 | 0.17597 | 0.1601 |
| Max Principal stress (MPa) | 17.516 | 16.293 | 13.694 | 14.025 | 13.227 |
| Max OSS | 0.31052 | 0.3002 | 0.26214 | 0.25153 | 0.2293 |
| Max SED (mJ/mm$^3$) | 1.5811 | 1.4601 | 1.1353 | 1.0683 | 0.91567 |

The optimal spoke designs are further analysed and validated, wherein an optimal Non-Pneumatic Tire is generated/obtained based on the optimal spoke design and the generated optimal Non-Pneumatic Tire is validated based on the input. The above steps of generating the NPT and validating thereof are better understood by way of following description. The selected optimized spoke designs shown in FIG. 15 have been plugged into the CAD model of NPT-UPTIS full tire and then it has been imported to ANSYS 16.0 Workbench for FEM simulations, in the present disclosure by system 100 and the method described herein. Full 3D simulations were performed for the 4 selected designs from each category to verify the effect of optimized spoke designs on full tire performance in terms of stiffness and damage resistance. In particular, DBDI polyurethane was used as material property for the spoke and the shear beam, the stress-strain curve of DBDI material property have been described above. Finer meshing was used in the spoke design to capture the curvature of top and bottom curve profiles (e.g., the first curve profile and the second curve profile). The comparison of stiffness and SED was carried out for 75 mm width of NPT-UPTIS tire. Below description illustrates an analysis of optimized spoke designs with full 3D NPT tire FEM simulations.

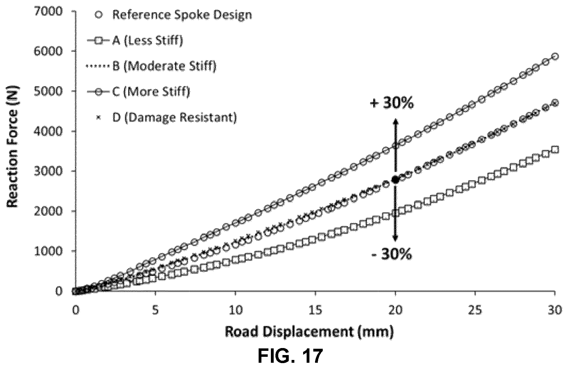

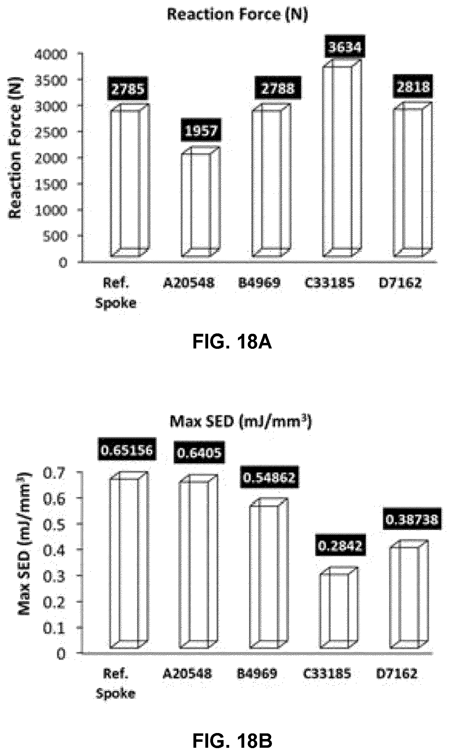

The stiffness comparison of optimized selected spoke designs from each of the four design categories have been represented in FIGS. 16A-16B. In a first category, the optimal spoke design selected had around 30% less stiffness and in a second category, the optimal spoke design selected had around 30% more stiffness compared the reference spoke design and the reference tire design, while in a third category of moderate stiffness and in a fourth category of damage resistant the stiffness was similar as compared to reference spoke design and the reference tire design. The comparison of reaction force (which decides whole NPT tire stiffness) and max SED (which is related to damage predicting performance) of the full 3-D tire are shown in FIG. 17. More specifically, FIG. 17, with reference to FIGS. 1 through 16B, depicts a graphical representation illustrating a stiffness comparison of the optimal Non-Pneumatic Tire with the reference tire design, in accordance with an embodiment of the present disclosure. FIGS. 18A-18B, with reference to FIGS. 1 through 17, depict a graphical representation illustrating a stiffness and damage resistance/predictors comparison of optimized NPT designs with the reference tire design, in accordance with an embodiment of the present disclosure. The value of all other output of 3D full tire is noted down in Table 7. Table 7 illustrates stiffness and damage resistance NPT parameters at 20 mm of road displacement for full NPT-UPTIS tire FEM simulation.

Table 7

| Output @ 20 mm of road displacement | Reference Spoke Design | A | B | C | D |
|---|---|---|---|---|---|
| Reaction Force (N) | 2785 | 1957 | 2788 | 3634 | 2818 |
| Max Principal strain | 0.080456 | 0.08813 | 0.082323 | 0.062994 | 0.067813 |
| Max Principal stress (MPa) | 8.3018 | 8.5398 | 7.641 | 5.3514 | 5.9883 |
| Max OSS | 0.1258 | 0.1272 | 0.12019 | 0.093654 | 0.10849 |
| Max SED (mJ/mm$^3$) | 0.65156 | 0.6405 | 0.54862 | 0.2842 | 0.38738 |

The conclusion of the optimized design performance of full 3D tires are mentioned in the Table 8. Table 8 illustrates a stiffness and damage resistance performance comparison of optimized NPT design with respect to the reference tire design (with 4 categories A, B, C, and D as mentioned above - first, second, third and fourth).

Table 8

| Categories | Stiffness | Damage Resistant |
|---|---|---|
| **A** | 30 % Less | Similar |
| **B** | Similar | 17% More |
| **C** | 30% More | 56% More |
| **D** | Similar | 40% More |

Spoke designs of category 'B' and 'D' have similar stiffness but having 17% and 56% more damage resisting performance compared to base design. While design 'C' has 30% more stiffness and 56% more damage resistance as mentioned above.

Using the method of the present disclosure, around 50,000 spoke designs were generated. The combined approaches of Machine learning and FEM enabled the system 100 to predict the performance of these generated spoke designs. The results of 50,000 designs were sorted out in four different design categories including three levels of tire stiffness and a best damage performance output. The optimized designs were validated with implementing them with the whole 3-dimensional NPT full tire simulations. The optimized NPT designs have $\pm$ 30% stiffness with 17%, 40% and 56% more damage resisting performances with respect to the starting base (reference) spoke design.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1.   A processor implemented method, comprising:

obtaining, via one or more hardware processors, an input comprising one or more Non-Pneumatic Tire (NPT) parameters associated with a tire (202);
generating, via the one or more hardware processors, a plurality of random interpolation points based on the one or more NPT parameters (204);
generating, via the one or more hardware processors, one or more candidate spoke designs from the plurality of random interpolation points (206);
extracting, via the one or more hardware processors, a first curve profile and a second curve profile from the one or more candidate spoke designs (208);
performing, via the one or more hardware processors, a comparison of the first curve profile and the second curve profile of the one or more candidate spoke designs with a first reference curve profile and a second reference curve profile obtained from a reference spoke design (210);
generating, via the one or more hardware processors, one or more updated candidate spoke designs based on the comparison (212);
analysing, using a finite element method (FEM) via the one or more hardware processors, one or more NPT parameters for the one or more updated candidate spoke designs to obtain the one or more updated NPT parameters (214);
processing, by using one or more machine learning models via the one or more hardware processors, the one or more updated NPT parameters to obtain one or more spoke properties (216); and
selecting, via the one or more hardware processors, at least one candidate spoke design from the one or more candidate spoke designs based on the one or more spoke properties (218), wherein the at least one candidate spoke design being selected serves as an optimal spoke design.

2.   The processor implemented method as claimed in claim 1, further comprising:

generating an optimal Non-Pneumatic Tire based on the optimal spoke design; and
validating the generated optimal Non-Pneumatic Tire based on the input.

3.   The processor implemented method as claimed in claim 1, wherein the one or more Non-Pneumatic Tire (NPT) parameters comprise a stiffness, and a damage resistance, wherein the stiffness and the damage resistance comprise one or more range values, wherein the first curve profile and the second curve profile from the one or more spoke designs are extracted by fitting a first set of coordinates and a second set of coordinates obtained from the one or more spoke designs into one or more associated polynomial equations, and wherein the one or more updated candidate spoke designs are generated by adjusting the first curve profile and the second curve profile of the one or more candidate spoke designs with the first reference curve profile and the second reference curve profile of the reference spoke design to maintain a volume equivalency in the one or more candidate spoke designs.

4.   The processor implemented method as claimed in claim 3, wherein the volume equivalency is maintained in the one or more candidate spoke designs by applying a constraint condition for an area difference of the one or more candidate spoke designs such that the area difference of the one or more candidate spoke designs and the reference spoke design is less than or equal to a pre-defined threshold, wherein the first curve profile and the second curve profile of the one or more candidate spoke designs are adjusted to enable a cross section of the one or more candidate spoke designs to be similar to the reference spoke design.

5.   The processor implemented method as claimed in claim 1, wherein the one or more spoke properties comprise at least one of a tensile strength, a compressive strength, and one or more damage analysis of the one or more updated candidate spoke designs.

6. A system (100), comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

obtain an input comprising one or more Non-Pneumatic Tire (NPT) parameters associated with a tire;
generate a plurality of random interpolation points based on the one or more NPT parameters;
generate one or more candidate spoke designs from the plurality of random interpolation points;
extract a first curve profile and a second curve profile from the one or more candidate spoke designs;
perform a comparison of the first curve profile and the second curve profile of the one or more candidate spoke designs with a first reference curve profile and a second reference curve profile obtained from a reference spoke design;
generate one or more updated candidate spoke designs based on the comparison;
analyse, by using a finite element method (FEM), one or more NPT parameters for the one or more updated candidate spoke designs to obtain the one or more updated NPT parameters;
process, by using one or more machine learning models, the one or more updated NPT parameters to obtain one or more spoke properties; and
select at least one candidate spoke design from the one or more candidate spoke designs based on the one or more spoke properties, wherein the at least one candidate spoke design being selected serves as an optimal spoke design.

7. The system as claimed in claim 6, wherein the one or more hardware processors are further configured by the instructions to

generate an optimal Non-Pneumatic Tire based on the optimal spoke design; and
validate the generated optimal Non-Pneumatic Tire based on the input.

8. The system as claimed in claim 6, wherein the one or more Non-Pneumatic Tire (NPT) parameters comprise a stiffness, and a damage resistance, wherein the stiffness and the damage resistance comprise one or more range values, wherein the first curve profile and the second curve profile from the one or more spoke designs are extracted by fitting a first set of coordinates and a second set of coordinates obtained from the one or more spoke designs into one or more associated polynomial equations, and wherein the one or more updated candidate spoke designs are generated by adjusting the first curve profile and the second curve profile of the one or more candidate spoke designs with the first reference curve profile and the second reference curve profile of the reference spoke design to maintain a volume equivalency in the one or more candidate spoke designs.

9. The system as claimed in claim 8, wherein the volume equivalency is maintained in the one or more candidate spoke designs by applying a constraint condition for an area difference of the one or more candidate spoke designs such that the area difference of the one or more candidate spoke designs and the reference spoke design is less than or equal to a pre-defined threshold, and wherein the first curve profile and the second curve profile of the one or more candidate spoke designs are adjusted to enable a cross section of the one or more candidate spoke designs to be similar to the reference spoke design.

10. The system as claimed in claim 6, wherein the one or more spoke properties comprise at least one of a tensile strength, a compressive strength, and one or more damage analysis of the one or more updated candidate spoke designs.

11. One or more non-transitory machine-readable information storage mediums comprising one or more instructions which when executed by one or more hardware processors cause:

obtaining, an input comprising one or more Non-Pneumatic Tire (NPT) parameters associated with a tire;
generating a plurality of random interpolation points based on the one or more NPT parameters;
generating one or more candidate spoke designs from the plurality of random interpolation points;
extracting a first curve profile and a second curve profile from the one or more candidate spoke designs;

performing a comparison of the first curve profile and the second curve profile of the one or more candidate spoke designs with a first reference curve profile and a second reference curve profile obtained from a reference spoke design;

generating one or more updated candidate spoke designs based on the comparison;

analysing, using a finite element method (FEM), one or more NPT parameters for the one or more updated candidate spoke designs to obtain the one or more updated NPT parameters;

processing, by using one or more machine learning models, the one or more updated NPT parameters to obtain one or more spoke properties; and

selecting at least one candidate spoke design from the one or more candidate spoke designs based on the one or more spoke properties , wherein the at least one candidate spoke design being selected serves as an optimal spoke design.

12. The one or more non-transitory machine-readable information storage mediums of claim 11, wherein the one or more instructions which when executed by the one or more hardware processors further cause:

generating an optimal Non-Pneumatic Tire based on the optimal spoke design; and
validating the generated optimal Non-Pneumatic Tire based on the input.

13. The one or more non-transitory machine-readable information storage mediums of claim 11, wherein the one or more Non-Pneumatic Tire (NPT) parameters comprise a stiffness, and a damage resistance, wherein the stiffness and the damage resistance comprise one or more range values, wherein the first curve profile and the second curve profile from the one or more spoke designs are extracted by fitting a first set of coordinates and a second set of coordinates obtained from the one or more spoke designs into one or more associated polynomial equations, and wherein the one or more updated candidate spoke designs are generated by adjusting the first curve profile and the second curve profile of the one or more candidate spoke designs with the first reference curve profile and the second reference curve profile of the reference spoke design to maintain a volume equivalency in the one or more candidate spoke designs.

14. The one or more non-transitory machine-readable information storage mediums of claim 13, wherein the volume equivalency is maintained in the one or more candidate spoke designs by applying a constraint condition for an area difference of the one or more candidate spoke designs such that the area difference of the one or more candidate spoke designs and the reference spoke design is less than or equal to a pre-defined threshold, and wherein the first curve profile and the second curve profile of the one or more candidate spoke designs are adjusted to enable a cross section of the one or more candidate spoke designs to be similar to the reference spoke design.

15. The one or more non-transitory machine-readable information storage mediums of claim 11, wherein the one or more spoke properties comprise at least one of a tensile strength, a compressive strength, and one or more damage analysis of the one or more updated candidate spoke designs.

SYSTEM
100

MEMORY
102

DATABASE
108

HARDWARE
PROCESSOR(S)
104

INTERFACE(S)
106

**FIG. 1**

obtaining an input comprising one or more Non-Pneumatic Tire (NPT) parameters associated with a tire — 202

↓

generating a plurality of random interpolation points based on the one or more NPT parameters — 204

↓

generating one or more candidate spoke designs from the plurality of random interpolation points — 206

↓

extracting a first curve profile and a second curve profile from the one or more candidate spoke designs — 208

↓

performing a comparison of the first curve profile and the second curve profile of the one or more candidate spoke designs with a first reference curve profile and a second reference curve profile obtained from a reference spoke design — 210

↓

generating one or more updated candidate spoke designs based on the comparison — 212

↓

analysing, using a finite element method (FEM), one or more NPT parameters for the one or more updated candidate spoke designs to obtain the one or more updated NPT parameters — 214

↓

processing, by using one or more machine learning models, the one or more updated NPT parameters to obtain one or more spoke properties — 216

↓

selecting at least one candidate spoke design from the one or more candidate spoke designs based on the one or more spoke properties, wherein the at least one candidate spoke design being selected serves as an optimal spoke design — 218

**FIG. 2**

**FIG. 3**

**FIG. 4**

FIG. 5

**FIG. 6A**

**FIG. 6B**

FIG. 7

FIG. 8

FIG. 9

FIG. 10

**FIG. 11**

**FIG. 12**

FIG. 13A

FIG. 13B

FIG. 13C

FIG. 13D

FIG. 13E

FIG. 13F

FIG. 13G

FIG. 13H

**FIG. 13I**

**FIG. 13J**

FIG. 14

(Reference Spoke Design)   (A)

(B)   (C)

(D)

FIG. 15

**FIG. 16A**

**FIG. 16B**

FIG. 17

**FIG. 18A**

**FIG. 18B**

Europäisches
Patentamt

European
Patent Office

Office européen
des brevets

# EUROPEAN SEARCH REPORT

**Application Number**

EP 23 20 8510

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 017 762 A (UNIV SOUTHEAST) 6 September 2022 (2022-09-06) * abstract * * paragraphs [0008], [0009], [0010], [0011], [0014] * * figures 1, 2 * * the whole document * | 1-15 | INV. G06F30/15 G06F30/23 G06F30/27 ADD. G06F111/10 |
| X | XU TING ET AL: "Lightweight Design Optimization of Nonpneumatic Tires under Radial-Stiffness Constraints", MACHINES, vol. 10, no. 10, 2 October 2022 (2022-10-02), page 889, XP093141535, ISSN: 2075-1702, DOI: 10.3390/machines10100889 Retrieved from the Internet: URL:https://www.mdpi.com/2075-1702/10/10/889> * abstract * * figures 1, 6, 12-15 * * sections 2-2.5, 3.3, 4-4.3 * * the whole document * | 1-15 | |

-/--

**TECHNICAL FIELDS SEARCHED (IPC)**

G06F

The present search report has been drawn up for all claims

| Place of search | Date of completion of the search | Examiner |
|---|---|---|
| Munich | 15 March 2024 | Joris, Pierre |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.......................................................................
& : member of the same patent family, corresponding
   document

EPO FORM 1503 03.82 (P04C01)

Europäisches
Patentamt

European
Patent Office

Office européen
des brevets

# EUROPEAN SEARCH REPORT

Application Number

EP 23 20 8510

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CASTANEDA ELVIS A ET AL: "Generative Design and DEM-FEA Simulations for Optimization and Validation of a Bio-Inspired Airless Tire-Wheel System for Land-Based Space Planetary Exploration Robot", 2022 INTERNATIONAL CONFERENCE ON ADVANCED ROBOTICS AND MECHATRONICS (ICARM), IEEE, 9 July 2022 (2022-07-09), pages 929-936, XP034236638, DOI: 10.1109/ICARM54641.2022.9959104 [retrieved on 2022-11-29] * abstract * * sections III.A, III.B, IV.A * * figures 5-8 * * the whole document * | 1-15 | |
| X,P | Dhrangdhariya Priyankkumar ET AL: "Topological Optimization of Non-Pneumatic Unique Puncture-Proof Tire System (NPT-UPTIS) Spoke Design for Tire Performance", , 28 February 2023 (2023-02-28), XP093141188, DOI: 10.47953/SAE-PP-00321 Retrieved from the Internet: URL:https://www.researchgate.net/publicati on/368704857_Topological_Optimization_of_N on-Pneumatic_Unique_Puncture-Proof_Tire_Sy stem_NPT-UPTIS_Spoke_Design_for_Tire_Perfo rmance [retrieved on 2024-03-13] * abstract * * sections 2-3 * * figures 2, 3, 5, 7, 11-14 * * the whole document * | 1-15 | TECHNICAL FIELDS SEARCHED (IPC) |

The present search report has been drawn up for all claims

| Place of search | Date of completion of the search | Examiner |
|---|---|---|
| Munich | 15 March 2024 | Joris, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 8510

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2024

| Patent document cited in search report | Publication date | Patent family member(s) | Publication date |
|---|---|---|---|
| CN 115017762 A | 06-09-2022 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202221064699